# FASCICULE DE BREVET EUROPEEN

(11) **EP 0 611 183 B1**
(45) Date de publication et mention de la délivrance du brevet: **22.07.1998**
(21) Numéro de dépôt: 94400194.0
(22) Date de dépôt: 28.01.1994
(51) Int. Cl.: C10G 67/06, C10G 45/04

(54) **Procédé d'élimination du mercure dans des hydrocarbures par passage sur un catalyseur présulfure**
Verfahren zur Entfernung von Quecksilber aus Kohlenwasserstoffen mittels einem vorgeschwefeltem Katalysator
Process for eliminating mercury in hydrocarbons by passing on presulphurised catalyst

(30) Priorité: 08.02.1993 FR 9301443
(43) Date de publication de la demande: 17.08.1994
(73) Titulaire: INSTITUT FRANCAIS DU PETROLE, 92502 Rueil-Malmaison (FR)
(72) Inventeur: Cameron, Charles, F-75006 Paris (FR); Cosyns, Jean, F-78580 Maule (FR); Sarrazin, Patrick, F-92500 Rueil Malmaison (FR); Boitiaux, Jean-Paul, F-78300 Poissy (FR); Courty, Philippe, F-78800 Houilles (FR)

(56) Documents cités:
- EP-A- 0 332 526
- EP-A- 0 357 873
- EP-A- 0 466 568
- WO-A-90/10684
- US-A- 4 046 674

## Description

La présente invention concerne l'élimination de mercure et éventuellement d'arsenic dans des hydrocarbures avec un catalyseur de transformation des composés contenant du mercure en mercure élémentaire et une masse de captation du mercure, ledit procédé permettant la captation du mercure avec une très grande efficacité dès la période initiale de démarrage du procédé.

Il est connu que les condensats liquides (sous produits de la production du gaz) et certains pétroles bruts peuvent contenir de nombreux composés métalliques à l'état de traces et souvent sous forme de complexes organométalliques. Ces composés métalliques sont très souvent des poisons des catalyseurs utilisés lors des transformations de ces coupes en produits commerciaux. Le mercure est particulièrement toxique pour l'activité des métaux précieux et de plus est un puissant corrosif vis-à-vis des pièces en aluminium, des joints et des soudures.

Il est donc avantageux d'épurer les charges destinées à être envoyées dans des procédés de transformation de condensats ou de bruts pour éviter un entraînement de mercure et éventuellement d'arsenic. L'épuration de la charge en amont des procédés de traitement permet de protéger l'ensemble de l'installation.

Des procédés de la demanderesse présentent de bonnes performances pour la démercurisation des hydrocarbures liquides servant comme charges de divers procédés de traitement. Le brevet US 4,911,825 de la demanderesse montre clairement l'avantage d'effectuer une captation de mercure dans un procédé en deux étapes où la première étape consiste à mettre en contact la charge en présence d'hydrogène avec un catalyseur renfermant au moins un métal du groupe constitué par le nickel, le cobalt, le fer et le palladium. Le mercure n'est pas (ou très peu) capté par le catalyseur mais est capté, dans la deuxième étape, par une masse renfermant du soufre ou un sulfure de métal, ce métal pouvant être le cuivre le fer, l'argent.

Le brevet WO-90/10684 de la demanderesse décrit un procédé d'élimination du mercure présent dans des hydrocarbures liquides. Cette invention concerne des catalyseurs ayant la propriété de résister à l'empoisonnement par le soufre (thiorésistance). Ces nouveaux catalyseurs permettent la captation du mercure dans des conditions trop sévères pour les catalyseurs décrits dans l'art antérieur.

Ce procédé est particulièrement utile pour l'épuration de charges difficiles comme, par exemple, des gasoils provenant d'un fractionnement du pétrole brut dans lequel la teneur en soufre est souvent entre 0,4 et 1,0% poids.

Par contre, le procédé décrit dans le brevet US 4,911,825 est plus performant pour des charges ayant des teneurs en soufre moins élevées, par exemple inférieures à 0,15 % poids.

Mais, on a pu constater qu'avec des charges ayant de faibles teneurs en soufre, par exemple inférieures à 0,07 % poids, l'efficacité de captation du mercure au début de la mise en oeuvre du procédé de démercurisation est faible dans les premières centaines d'heures de mise en régime puis augmente. Il a été aussi découvert que l'efficacité de captation du mercure est moins bonne pour des charges très pauvres en soufre, par exemple inférieures à 0,02 % pds. Dans ce dernier cas, il est nécessaire d'augmenter la température de fonctionnement du réacteur de plusieurs dizaines de degrés et/ou le débit d'hydrogène pour permettre une captation suffisante de mercure.

La présente invention se propose de remédier à ces inconvénients.

Il a en effet été découvert que le prétraitement des catalyseurs de transformation des composés contenant du mercure en mercure élémentaire par un agent soufré en présence d'un agent réducteur, conduit à une réduction importante de la durée de mise en régime du procédé et à une bonne efficacité de captation de mercure même avec une charge très pauvre en soufre, et à des températures basses (inférieures ou égales à 250°C).

L'objet de la présente invention est un procédé d'élimination de mercure et éventuellement d'arsenic dans lequel le catalyseur de transformation des composés contenant du mercure en mercure élémentaire est prétraité avant d'être mis en contact avec la charge hydrocarbonée à épurer. Selon ce procédé, un mélange de la charge avec de l'hydrogène est mis en contact avec un catalyseur présulfuré renfermant au moins un métal du groupe formé par le fer, le nickel, le cobalt, le chrome, le molybdène, le tungstène et le palladium ou au moins 5 % du métal est à l'état de sulfure et en général au plus 50%, puis le produit obtenu est mis en contact avec une masse de captation de mercure élémentaire renfermant du soufre ou un sulfure de métal.

Le catalyseur entrant dans la composition de la présente invention est constitué d'au moins un métal M choisi dans le groupe formé par le fer, le nickel, le cobalt, le molybdène, le tungstène et le palladium et d'un support. Le métal M doit se trouver sous forme sulfure pour au moins 5 % en poids de sa totalité et au plus, en général, 50%. On utilise de préférence le nickel ou l'association du nickel avec le palladium.

Le dispersant minéral solide (support) peut être choisi dans le groupe formé par l'alumine, les silices-alumines, la silice, les zéolithes, le charbon actif, les argiles et les ciments alumineux. Il présentera de préférence une grande surface, un volume poreux suffisant et un diamètre moyen des pores adéquat. La surface BET devra être supérieure à 50 m²/g et de préférence entre environ 100 et 350 m²/g. Le support devra posséder un volume poreux, mesuré par désorption d'azote, d'au moins 0,5 cm³/g et de préférence entre 0,6 et 1,2 cm³/g et un diamètre moyen des pores au moins égal à 7 nm et de préférence supérieur à 8 nm (1nm = 10⁻⁹m).

La préparation d'un solide (ou précurseur catalytique) contenant au moins un métal M sous forme métallique ou sous forme d'oxyde métallique supporté est suffisamment connue de l'homme de métier pour ne pas être décrite dans le cadre de la présente invention. La teneur en métal M (calculée sous forme oxyde) dans le catalyseur est de préférence d'au moins 5 % en poids et au plus de 60 % en poids, et encore plus avantageusement au plus 40%, voire 30%.
Le cas du palladium est particulier, on pourra avoir au plus 0,2% en poids de palladium (calculé forme métal).

Le procédé de présulfuration est décrit dans le brevet EP-466.568 (dont l'enseignement est ci-inclus).
Le précurseur de la masse contenant ledit (lesdits) métal (métaux) supporté(s) sous forme métallique et/ou oxyde, est
a) dans une première étape, imprégné par une solution aqueuse ou organique ou une suspension aqueuse ou organique renfermant d'une part au moins un agent réducteur organique, et d'autre part au moins un agent sulfuré choisi dans le groupe constitué par :
   - au moins un polysulfure organique éventuellement en mélange avec du soufre élémentaire,
   - au moins un disulfure organique éventuellement en mélange avec du soufre élémentaire,
   - au moins un sulfure organique ou minéral éventuellement en mélange avec du soufre élémentaire,
   - le soufre élémentaire,
b) dans une seconde étape, on traite thermiquement le précurseur ainsi imprégné. La température est par exemple entre 100-200°C, généralement entre 130-170°C et plus particulièrement autour de 150°C. La durée de traitement est de 30 mn à 3 h.

L'addition du soufre peut se faire, hors site, en imprégnant le précurseur catalytique soit par le sulfure d'ammonium et/ou une suspension colloïdale de soufre dans l'eau soit par un agent soufré, c'est à dire le soufre et/ou un ou plusieurs composés soufrés, dans une solution organique. Un agent réducteur est par exemple, le formaldéhyde, l'acétaldéhyde, l'hydrazine, le formiate de méthyle, l'acide formique, etc.

Avant d'être mise au contact de la charge à traiter, le catalyseur est, si nécessaire, réduit par de l'hydrogène ou par un gaz renfermant de l'hydrogène à une température de 120 à 600°C et de préférence de 140 à 400°C.

Le solide ainsi préparé, présulfuré puis réduit constitue le catalyseur dans sa forme active de la présente invention.

La masse de captation de mercure qui suit le catalyseur dans le procédé de l'invention devrait avoir une faible solubilité dans la charge à traiter et une forte affinité pour le mercure élémentaire. On peut citer comme masses de captation de mercure, à titre indicatif, le sulfure de cuivre, le dichlorure d'étain et l'iodate de potassium.

L'ensemble constitué par le catalyseur et la masse de captation de mercure pourra être mis en oeuvre soit dans deux réacteurs soit dans un seul. Lorsqu'un réacteur est utilisé, le catalyseur et la masse de captation sont disposés en deux lits séparés. Dans les deux configurations la masse de captation se trouve après le catalyseur.

Selon les quantités de mercure et/ou arsenic (calculées sous forme élémentaire) contenues dans la charge, le rapport volumique du catalyseur à la masse de captation pourra varier entre 1:10 et 5:1.

Lorsqu'on opère en réacteurs séparés, on pourra, en ce qui concerne le catalyseur, opérer dans un domaine de température pouvant aller de 120 à 250°C, plus avantageusement de 130 à 200°C ou encore 130-200°C, de façon préférée 140-190°C et de façon encore plus préférée de 140 à 190°C. Les pressions opératoires seront choisies de préférence de 1 à 40 bars et plus avantageusement de 5 à 35 bars.

Pour assurer une bonne efficacité de captation de mercure il est préféré que la masse de captation de mercure fonctionne au dessous de 220°C, de préférence encore au dessous de 180°C et de façon plus préférée au dessous de 150°C. Les vitesses spatiales calculées par rapport à la masse de captation peuvent être de 1 à 50 h-1 et plus particulièrement de 1 à 30 h-1 (volume de liquide par volume de masse par heure).

Le débit d'hydrogène rapporté au catalyseur est compris par exemple entre 1 et 500 volumes (gaz aux conditions normales) par volume de catalyseur par heure.

Les charges gazeuses ou liquides auxquelles s'appliquent plus particulièrement l'invention renferment de 10⁻³ à 5 milligrammes de mercure par kilogramme de charge (mg/kg ou ppm) et éventuellement de 0 à 1000 milligrammes de soufre par kilogramme de charge. Elles peuvent également renfermer de l'arsenic, en général de 0 à 5 mg/kg de charge.

Les exemples qui suivent précisent le procédé à titre indicatif sans toutefois en limiter la portée.

### EXEMPLES

Catalyseur A : Quinze kilogrammes d'un support d'alumine macroporeux sous forme de billes de 1·5x10⁻³ mm de diamètre et présentant une surface spécifique de 160 m²/g, un volume poreux total de 1,05 cm³/g et un volume macroporeux (diamètre > 0,1 µm) de 0,4 cm³/g sont imprégnés par 20 % en poids de nickel sous forme d'une solution aqueuse de nitrate. Après séchage à 120°C durant 5 h et activation thermique à 450°C pendant 2 h sous balayage d'air, on obtient des billes contenant 25,4 % en poids d'oxyde de nickel.

Catalyseur B : Cinq kilogrammes du catalyseur A sont imprégnés à sec par une solution renfermant 175 g de DEODS diéthanoldisulfure (dont 74 g de soufre) dans 5150 cm³ d'une solution de formiate de méthyle à 15 % dans un white spirit. Le catalyseur ainsi préparé est activé à 150°C pendant 1 h.

Masse de captation : Quinze kilogrammes du support utilisé pour la préparation du catalyseur A sont imprégnés par 10 % en poids de cuivre sous forme d'une solution aqueuse de nitrate de cuivre trihydraté. Après séchage à 120°C durant 5 h et activation thermique à 450°C pendant 2 h sous balayage d'air, on obtient des billes contenant 12,5 % en poids d'oxyde de cuivre. Ces billes sont ensuite imprégnées par une solution de 10 % en poids de sulfure d'ammonium. Le produit est activé à 120°C durant 2 h sous courant d'azote. Cette masse a été utilisée dans le réacteur II pour tous les exemples ci-dessous.

Les tests sont effectués avec deux réacteurs en série : un réacteur I dans lequel on place le catalyseur (50 cm³) et un réacteur II, après le réacteur I, dans lequel on place la masse de captation (50 cm³). Le catalyseur travaille dans tous les exemples ci-dessous à 180 °C et la masse de captation de mercure à 20 °C. Le flux est ascendant dans les deux réacteurs.

### EXEMPLE 1 (comparatif)

Le catalyseur A dans le réacteur I a été réduit à 400°C sous un débit de 20 l/h de d'hydrogène à 2 bars de pression pendant 4 h. Ensuite, le réacteur a été refroidi à la température de réaction 180°C. On fait ensuite passer sur le catalyseur puis sur la masse de captation un condensat lourd de gaz liquéfié avec de l'hydrogène. Le débit de la charge est de 400 cm³/h et celui de l'hydrogène de 3,5 l/h. Le test est effectué sous une pression de 35 bars.

Le condensat utilisé pendant ce test (condensat A) possède les caractéristiques suivantes :
point d'ébullition initial : 21°C
point d'ébullition final : 470°C
teneur en mercure : 1680 µg/kg (1.68 ppm)
teneur en soufre : 237 mg/kg
teneur en arsenic : 65 µg/kg

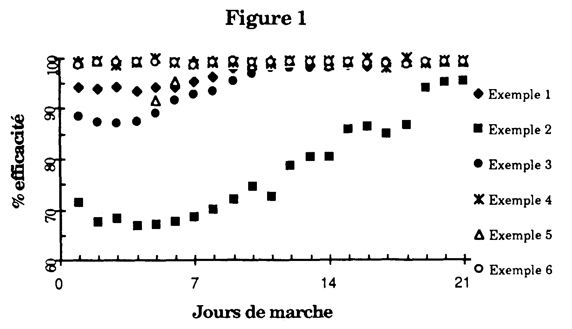

Le test a été conduit pendant une durée de 20,5 jours. Un échantillon de l'effluent du procédé a été récupéré et analysé chaque jour. Les résultats de captation exprimés en pour cent de l'efficacité sont indiqués sur la Figure 1. On note que l'efficacité de captation est élevée, cependant dans les deux cents premières heures d'opération, l'efficacité de captation est légèrement plus faible qu'à la fin du test. Une faible quantité d'arsenic (5 à 10 µg/kg) a été détectée pendant les 72 premières heures.

### EXEMPLE 2 (comparatif)

Un deuxième test de captation de mercure a été conduit sur un condensat (condensat B) possédant les caractéristiques suivantes :
point d'ébullition initial : 18°C
point d'ébullition final : 520°C
teneur en mercure : 120 µg/kg
teneur en soufre : 89 mg/kg
teneur en arsenic : < 5 µg/kg

Toutes les conditions de préréduction et d'opération sont identiques à celles du test précédent décrit dans l'exemple 1. On note sur la Figure 1 que l'efficacité de captation de mercure pendant ce test reste nettement inférieure à celle du test précèdent.

### EXEMPLE 3 (comparatif)

Un troisième test de captation de mercure a été effectué utilisant un condensat (condensat C) ayant les caractéristiques suivantes :
point d'ébullition initial : 21°C
point d'ébullition final : 491 °C
teneur en mercure : 2210 µg/kg
teneur en soufre : 117 mg/kg
teneur en arsenic : 80 µg/kg

Une fois encore, toutes les conditions de préréduction et d'opération sont identiques à celles du test de l'exemple 1. Les résultats de ce test, indiqués sur la Figure 1, sont intermédiaires par rapport à ceux des exemples 1 et 2. On note, comme dans l'exemple 1, de faibles teneurs d'arsenic (5 à 10 µg/kg) pendant les 240 premières heures de mise en régime.

### EXEMPLE 4 (selon l'invention)

Le premier réacteur a été chargé de 50 cm³ du catalyseur B, présulfuré comme décrit ci-dessus. Toutes les autres conditions de test sont identiques à celles indiquées dans l'exemple 1 incluant la charge (condensat A). Les résultats obtenus en présence du catalyseur B ont montré une efficacité de captation élevée dès le départ du test et le maintien de cette efficacité pendant toute la durée du test. La teneur en arsenic reste inférieure à la limite de détection ( < µg/kg) pendant tout le test.

### EXEMPLE 5 (selon l'invention)

Comme dans l'exemple 4, le premier réacteur a été chargé de 50 cm³ du catalyseur B. Cette fois ci, le catalyseur a été réduit à 300°C sous un débit de 20 l/h de d'hydrogène à 2 bars de pression pendant 6 h avant de le refroidir à la température de réaction 180°C. Le condensat B a été employé comme charge à purifier. Les autres conditions opératoires sont les mêmes que celles de l'exemple 1. Les résultats de ce test montrent clairement une amélioration nette de la performance de la captation de mercure selon l'invention.

### EXEMPLE 6 (selon l'invention)

On a procédé d'une manière identique à celle de l'exemple 5 mais avec le condensat C comme charge à traiter. Les résultats de ce test sont aussi bons que ceux obtenus dans l'exemple 5. On note aussi que la teneur en arsenic dans l'effluent est inférieure à la limite de détection pendant tout le test.

Les résultats de ces tests (captation du mercure en fonction du temps) sont reportés sur la figure 1.

**On note** également que les résultats des exemples 4, 5 et 6 sont presque toujours superposables ; les résultats des exemples 1 et 3-6 sont très proches après le 10 dixième jour de marche.

## Revendications

1. Procédé d'élimination du mercure et éventuellement d'arsenic dans une charge hydrocarbonée renfermant de 0 à 1000 mg de soufre/kg, dans lequel la charge en présence d'hydrogène est mise au contact d'un catalyseur renfermant au moins un métal et un support, puis le produit obtenu est mis au contact d'une masse de captation du mercure renfermant du soufre ou un sulfure métallique, procédé caractérisé en ce que le catalyseur présulfuré renferme au moins un métal choisi dans le groupe formé par le fer, le nickel, le cobalt, le molybdène, le tungstène, le chrome, et le palladium, au moins 5% en poids dudit ou desdits métaux étant combinés à l'état de sulfure, que le catalyseur est obtenu dans une première étape par imprégnation du précurseur de catalyseur, renfermant ledit ou lesdits métaux supporté sous forme métallique et/ou oxyde, à l'aide d'une solution aqueuse ou organique ou une suspension aqueuse ou organique renfermant d'une part au moins un agent réducteur et d'autre part au moins un agent sulfuré choisi dans le groupe constitué par
• au moins un polysulfure organique éventuellement en mélange avec du soufre élémentaire,
• au moins un disulfure organique éventuellement en mélange avec du soufre élémentaire,
• au moins un sulfure organique ou minéral éventuellement en mélange avec du soufre élémentaire,
• le soufre élémentaire,
ledit précurseur imprégné étant ensuite dans une seconde étape, traité thermiquement,
et que la mise en contact avec le catalyseur a lieu à une température de 120 à 250°C et une pression de 1 à 40 bars, et la mise en contact avec la masse de captation a lieu à une température inférieure à 220°C et une vitesse spatiale de 1 à 50 ^{h-1}.

2. Procédé selon la revendication 1, caractérisé en ce que le débit d'hydrogène rapporté au catalyseur est compris entre 1 et 500 volumes de gaz par volume de catalyseur et par heure.

3. Procédé selon l'une des revendications précédentes, caractérisé en ce que la charge renferme de 0 à 5 mg d'arsenic par kg de charge.

4. Procédé selon l'une des revendications précédentes, caractérisé en ce le rapport volumique du catalyseur à la masse de captation est compris entre 1:10 et 5:1.

5. Procédé selon l'une des revendications précédentes, caractérisé en ce que le métal du catalyseur est le nickel.

6. Procédé selon l'une des revendications précédentes, caractérisé en ce que les métaux du catalyseur sont le nickel et le palladium.

7. Procédé selon l'une des revendications précédentes, caractérisé en ce que le support est choisi dans le groupe constitué par l'alumine, les silice-alumines, la silice, les zéolithes, le charbon actif, les argiles et les ciments alumineux.

8. Procédé selon l'une des revendications précédentes, caractérisé en ce que l'état de sulfure est obtenu par imprégnation, hors du réacteur, du précurseur catalytique à l'aide d'au moins un liquide contenant du soufre choisi dans le groupe constitué par le sulfure d'ammonium, une suspension colloïdal de soufre dans l'eau, une solution organique de soufre, une solution organique de composé(s) soufré(s).

9. Procédé selon l'une des revendications précédentes, caractérisé en ce que la charge renferme de 10⁻³ à 5 mg d'arsenic par kg de charge.

10. Procédé selon l'une des revendications précédentes, caractérisé en ce que la charge est mise au contact du catalyseur à une température de 130-200°C.

11. Procédé selon l'une des revendications précédentes, caractérisé en ce que le précurseur obtenu est réduit sous hydrogène à 120-600°C avant d'être mis au contact de la charge.

12. Procédé selon l'une des revendications précédentes, caractérisé en ce que le précurseur est traité thermiquement entre 100 et 200°C dans la seconde étape.

13. Procédé selon l'une des revendications précédentes, caractérisé en ce que au plus 50 % poids dudit métal ou desdits métaux du catalyseur est combiné à l'état de sulfure.

## Patentansprüche

1. Verfahren zur Entfernung des Quecksilbers und ggf. Arsens aus einer kohlenwasserstoffhaltigen 0 bis 1000 mg Schwefel/kg umfassenden kohlenwasserstoffhaltigen Charge, bei dem die Charge in Anwesenheit von Wasserstoff mit einem Katalysator kontaktiert wird, der wenigstens ein Metall und einen Träger umfaßt, wonach das erhaltene Produkt mit einer Quecksilbereinfangmasse kontaktiert wird, die Schwefel oder ein metallisches Sulfid umfaßt, dadurch gekennzeichnet, daß der vorgeschwefelte Katalysator wenigstens ein Metall umfaßt, das aus der durch Eisen, Nickel, Kobalt, Molybdän, Wolfram, Chrom und Palladium gebildeten Gruppe gewählt ist, wobei wenigstens 5 Gew.-% dieses oder dieser Metalle im Sulfidzustand verbunden sind, daß der Katalysator in einer ersten Stufe durch Imprägnieren des Katalysatorvorläufers erhalten wird, welcher dieses oder diese Metalle auf dem Träger in metallischer und/oder oxidischer Form umfaßt, und zwar mit Hilfe einer wässrigen organischen Lösung oder einer wässrigen oder organischen Suspension, die einerseits wenigstens ein Reduktionsmittel und andererseits wenigstens ein sulfidisches Mittel umschließt, das gewählt ist aus der Gruppe, die gebildet wird durch
- wenigstens ein organisches Polysulfid, ggf. im Gemisch mit elementarem Schwefel,
- wenigstens ein organisches Disulfid, ggf. im Gemisch mit elementarem Schwefel,
- wenigstens ein organisches Sulfid oder Mineral, ggf. im Gemisch mit elementarem Schwefel, und
- elementarem Schwefel,
wobei dieser imprägnierte Vorläufer dann in einer zweiten Stufe, thermisch behandelt wird,
und daß die Kontaktierung mit dem Katalysator bei einer Temperatur von 120 bis 250°C und einen Druck von 1 bis 40 Bar stattfindet und die Kontaktierung mit der Einfangmasse bei einer Temperatur unterhalb 220°C und einer Raumgeschwindigkeit von 1 bis 50^{h-1} stattfindet.

2. Verfahren nach Anspruch 1, dadurch gekennzeichnet, daß die Wasserstoffmenge bezogen auf den Katalysator zwischen 1 und 500 Volumenteilen Gas pro Volumenteilenkatalysator und Stunde umfaßt.

3. Verfahren nach einem der vorhergehenden Ansprüche, dadurch gekennzeichnet, daß die Charge 0 bis 5 mg Arsen pro kg Charge umschließt.

4. Verfahren nach einem der vorhergehenden Ansprüche, dadurch gekennzeichnet, daß das Volumenverhältnis des Katalysators zur Einfangmasse zwischen 1:10 und 5:1 liegt.

5. Verfahren nach einem der vorhergehenden Ansprüche, dadurch gekennzeichnet, daß das Metall des Katalysators Nickel ist.

6. Verfahren nach einem der vorhergehenden Ansprüche, dadurch gekennzeichnet, daß die Metalle des Katalysators Nickel und Palladium sind.

7. Verfahren nach einem der vorhergehenden Ansprüche, dadurch gekennzeichnet, daß der Träger gewählt ist aus der Gruppe, die gebildet wird durch Aluminiumoxid, die Siliziumoxide-Aluminiumoxide, Siliziumoxide, die Zeolithe, Aktivkohlen, Tone und aluminiumoxidhaltige Zemente.

8. Verfahren nach einem der vorhergehenden Ansprüche, dadurch gekennzeichnet, daß der Sulfidzustand erhalten wird durch Imprägnieren außerhalb des Reaktors des katalytischen Vorläufers mit Hilfe wenigstens einer Schwefel enthaltenden Flüssigkeit, die gewählt ist aus der Gruppe, die gebildet wird durch Ammoniumsulfid, eine kolloidale Suspension von Schwefel in Wasser, eine organische Schwefellösung, eine organische Lösung schwefelhaltiger Verbindunge(n).

9. Verfahren nach einem der vorhergehenden Ansprüche, dadurch gekennzeichnet, daß die Charge 10⁻³ bis 5 mg Arsen pro kg Charge umschließt.

10. Verfahren nach einem der vorhergehenden Ansprüche, dadurch gekennzeichnet, daß die Charge mit dem Katalysator bei einer Temperatur von 130-200°C kontaktiert wird.

11. Verfahren nach einem der vorhergehenden Ansprüche, dadurch gekennzeichnet, daß der erhaltene Vorläufer unter Wasserstoff bei 120-600°C reduziert wird, bevor er mit der Charge kontaktiert wird.

12. Verfahren nach einem der vorhergehenden Ansprüche, dadurch gekennzeichnet, daß der Vorläufer thermisch zwischen 100 und 200°C in der zweiten Stufe behandelt wird.

13. Verfahren nach einem der vorhergehenden Ansprüche, dadurch gekennzeichnet, daß höchstens 50 Gew.-% dieses Metalls oder dieser Metalle des Katalysators im Sulfidzustand verbunden werden.

## Claims

1. A process for the elimination of mercury and, if present, arsenic from a hydrocarbon feedstock comprising from 0 to 1000 mg of sulphur/kg, wherein the feedstock, in the presence of hydrogen, is brought into contact with a catalyst constituted by at least one metal and a support, the product obtained then being brought into contact with a mercury retention bed comprising sulphur or a metallic sulphide, characterised in that the presulphurated catalyst comprises at least one metal selected from the group formed by iron, nickel, cobalt, molybdenum, tungsten, chromium and palladium, at least 5 % by weight of said metal or metals being in the form of its sulphide, and in that the catalyst is obtained in a first step by impregnation of a catalyst precursor comprising said supported metal or metals in the metallic and/or oxide form, using an aqueous or organic solution or an aqueous or organic suspension comprising a reducing agent and at least one sulphur containing agent selected from the group constituted by
. at least one organic polysulphide which may if necessary be mixed with elemental sulphur,
. at least one organic disulphide which may if necessary be mixed with elemental sulphur,
. at least one organic or inorganic sulphide which may if necessary be mixed with elemental sulphur,
. elemental sulphur,
said impregated precursor then being thermally treated in a second step,
and in that contact with the catalyst takes place at a temperature of 120°C to 250°C and a pressure of 1 to 40 bars, and that the contact with the retention bed takes place at a temperature of less than 220°C and volume flow of 1 to 50 h⁻¹.

2. Process according to claim 1, characterised in that the hydrogen flowrate with respect to the catalyst is between 1 and 500 volumes of gas per volume of catalyst per hour.

3. Process according to any one of the preceding claims, characterised in that the feedstock comprises from 0 to 5 mg of arsenic per kilogram of feedstock.

4. Process according to any one of the preceding claims, characterised in that the volume ratio of catalyst to retention bed is between 1:10 and 5:1.

5. Process according to any one of the preceding claims, characterised in that the metal of the catalyst is nickel.

6. Process according to any one of the preceding claims, characterised in that the metals of the catalyst are nickel and palladium.

7. Process according to any one of the preceding claims, characterised in that the support is selected from the group constituted by alumina, aluminosilicates, silica, zeolites, activated carbon, clays and alumina cements.

8. Process according to any one of the preceding claims, characterised in that the sulphur is obtained by offsite impregnation of the catalytic precursor using at least one sulphur containing liquid selected from the group constituted by ammonium sulphide, a colloidal suspension of sulphur in water, an organic solution of sulphur, an organic solution of a sulphur containing compound or compounds.

9. Process according to any one of the preceding claims, characterised in that the feedstock comprises 10⁻³ to 5 mg of arsenic per kilogram of feedstock.

10. Process according to any one of the preceding claims, characterised in that the feedstock is brought into contact with the catalyst at a temperature of 130-200°C.

11. Process according to any one of the preceding claims, characterised in that the precursor obtained is reduced in hydrogen at 120-600°C before being brought into contact with the feedstock.

12. Process according to any one of the preceding claims, characterised in that the precursor is thermally treated at a temperature of between 100°C and 200°C in the second step.

13. Process according to any one of the preceding claims, characterised in that at most 50 % by weight of the metal(s) of the catalyst is in the form of sulfide.
